# EUROPÄISCHE PATENTSCHRIFT

(11) **EP 2 972 000 B1**
(45) Veröffentlichungstag und Bekanntmachung des Hinweises auf die Patenterteilung: **27.05.2020**
(21) Anmeldenummer: 14708294.5
(22) Anmeldetag: 07.03.2014
(51) Int. Cl.: F24H 9/20

(54) **HEIZGERÄT MIT EINER BEDIENEINHEIT SOWIE VERFAHREN ZUM BEDIENEN EINES HEIZGERÄT**
HEATING DEVICE WITH AN OPERATING UNIT AND METHOD FOR OPERATING A HEATING DEVICE
APPAREIL DE CHAUFFAGE DOTÉ D'UNE UNITÉ DE COMMANDE ET PROCÉDÉ DE COMMANDE D'UN APPAREIL DE CHAUFFAGE

(30) Priorität: 12.03.2013 DE 102013204286
(43) Veröffentlichungstag der Anmeldung: 20.01.2016
(73) Patentinhaber: Robert Bosch GmbH, 70442 Stuttgart (DE)
(72) Erfinder: MOES, Sebastiaan, 7468SH Enter (NL); OEHRLEIN, Manfred, 73278 Schlierbach (DE); WUENNING, Marcus, 73061 Ebersbach (DE); MACHO, Alexander, 73230 Kirchheim (DE)
(86) Internationale Anmeldenummer: PCT/EP2014/054449
(87) Internationale Veröffentlichungsnummer: WO 2014/139886

(56) Entgegenhaltungen:
- EP-A2- 2 103 887
- CN-U- 202 048 626
- CN-U- 202 133 084
- DE-A1- 4 302 023
- DE-U1-202005 004 546
- DE-U1-202010 013 649

## Beschreibung

Die Erfindung betrifft ein Heizgerät mit einer Heizeinrichtung, einem Wärmeübertragungselement, einer Steuerung, einer Ummantelung und einer Bedieneinheit.

### Stand der Technik

Mit der DE 19801081C2 wurde ein Wärmegerät bekannt, das als Etagenheizung und/oder Durchlauferhitzer ausgebildet ist. Es wird dort vorgeschlagen, den Geräte-Aufbau aus einer Kombination von flächigen Glas- und/oder Glaskeramik-Formteilen mit flächigen Blechteilen auszuführen, wobei zumindest im Bereich des Brennraums derartige, flächige Glas- und/oder Keramikformteile vorgesehen sein sollen.

Ferner ist aus der EP 2431671 bekannt, bei einem elektrischen Wasserheizer ein Display vorzusehen, das als Touchscreen Display ausgeführt sein kann. EP 2103887 A2 offenbart ein Heizgerät mit den Merkmalen des Oberbegriffs des Anspruchs 1.

Aufgabe der Erfindung ist, ein Heizgerät der eingangs genannten Art so auszugestalten, dass insbesondere auch für einen nicht geschulten Endverbraucher sinnvolle Eingaben möglich sind, ohne umfangreiche Bedienungsanleitungen studieren zu müssen.

### Offenbarung der Erfindung

Das erfindungsgemäße Heizgerät mit den Merkmalen des Hauptanspruchs hat den Vorteil, dass die Bedieneinheit als solches ihre Funktion hinsichtlich Aufnahme und Weiterverarbeitung eingegebener Anweisungen ungestört nachkommen kann, darüber hinaus aber ein Touchscreen aufweist, über das nicht nur Anweisungen entgegengenommen werden können sondern auch Informationen dargestellt und eine Menüführung bereitgestellt werden kann.

Unter einer Bedieneinheit soll eine Vorrichtung verstanden werden, über die ein Heizgerät bedient werden kann, die also eine Eingabevorrichtung aufweist, die eingegebene Anweisungen in für die Steuerung entgegennehmbare Befehle umsetzen kann. Die Steuerung kann Teil der Bedieneinheit sein. Unter einem Touchscreen wird eine Vorrichtung verstanden, die eine als veränderbares Display verwendbare Fläche aufweist, die berührungssensitiv ist und aufgrund der Berührung an unterschiedlichen Stellen des Displays eine Zuordnung zu den auf dem Display dargestellten Inhalten vornehmen kann.

Durch die in den Unteransprüchen aufgeführten Merkmale sind vorteilhafte Weiterbildungen des Heizgerätes nach dem Hauptanspruch möglich.

Die Bedieneinheit ist geschützt untergebracht, wenn sie an einer Innenseite der Ummantelung des Heizgerätes angebracht ist.

Eine optimale Bedienung ist gewährleistet, wenn die Bedieneinheit von einer Außenseite der Ummantelung bedienbar ist.

Die Bedienbarkeit kann erhöht werden, wenn die Ummantelung eine transparente Fläche aufweist, durch die die Bedieneinheit sichtbar ist.

Ist die Bedieneinheit abnehmbar, erhöht das zum einen den Komfort und zum andern die Bedienbarkeit, insbesondere weil sich die Bedieneinheit dann auch auf einer ebenen Unterfläche positionieren lässt.

Die Funktionalitäten der Bedieneinheit werden erhöht, wenn die Bedieneinheit internetfähig ist, das heißt, eine Verbindung mit dem Internet aufnehmen kann.

Die Erfindung ermöglicht auch ein Verfahren zum Bedienen eines Heizgerätes mit einer ein Touchscreen aufweisenden Bedieneinheit. Das Bedienen des Heizgerätes wird wesentlich verbessert, wenn über das Touchscreen die wesentlichen, zur Steuerung des Heizgerätes notwendigen Parameter angezeigt, ausgewählt und beeinflusst werden können.

Das Bedienen wird weiter vereinfacht, wenn Parameter des Heizgerätes und/oder der Umgebung in Tabellenform oder als Grafik angezeigt werden können.

Insbesondere bei einer hohen Informationsdichte kann das Verfahren dadurch positiv weitergebildet werden, dass über das Touchscreen die Anzeige vergrößert und verkleinert werden kann.

Das Verfahren zum Bedienen eines Heizgerätes wird ferner optimiert, wenn die Bedieneinheit mit dem Internet verbunden werden kann.

### Zeichnung

In den Figuren ist eine Ausführungsform eines erfindungsgemäßen Heizgerätes sowie eines Verfahrens zum Bedienen eines Heizgerätes dargestellt und in der nachfolgenden Beschreibung näher erläutert. Es zeigen
Figur 1 ein erfindungsgemäßes Heizgerät in einer Frontansicht,
Figur 2 das erfindungsgemäße Heizgerät nach Figur 1 in einer Seitenansicht in schematischer Darstellung und teilweise im Schnitt und
Figur 3 den Ablauf eines möglichen Verfahrens zur Bedienung des Heizgerätes.

### Beschreibung

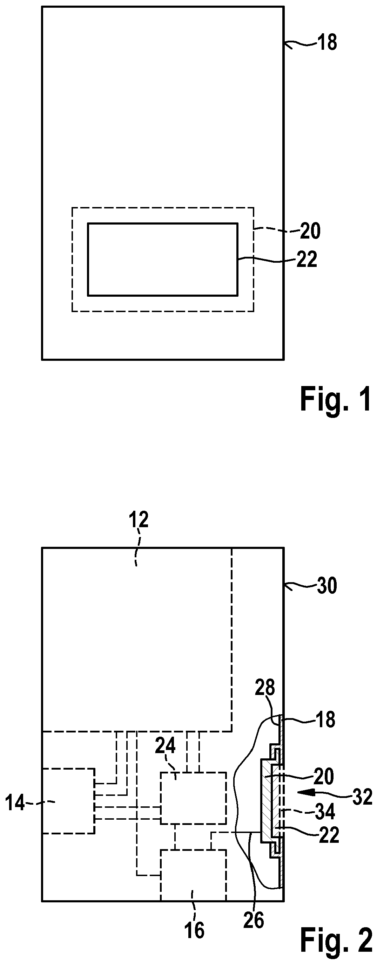

In den Figuren 1 und 2 ist ein Heizgerät 10 dargestellt, dessen Vorderseite in Figur 1 und dessen Seitenseite in Figur 2 sichtbar ist. Das Heizgerät (10) weist eine Heizeinrichtung 12, ein Wärmeübertragungselement 14, eine Steuerung 16, eine Ummantelung 18 und eine Bedieneinheit 20 auf. Die Bedieneinheit 20 weist ihrerseits ein Touchscreen 22 auf.

Das Touchscreen 22 ist in die Bedieneinheit 20 so integriert, dass es eine Außenfläche der Bedieneinheit 20 bildet und mit der Bedieneinheit 20 kommunizieren kann. Die Bedieneinheit 20 ihrerseits ist mit der Steuerung 16 verbunden.

Die schematisch dargestellte Steuerung 16 ist in der Lage, die von der Bedieneinheit 20 und ihrem Touchscreen 22 aufbereiteten Signalen in Steuersignale für eine schematisch dargestellte hydraulische Gruppe 24 sowie die Heizeinrichtung 12 umzusetzen. Ferner kann die Steuerung 16 ihrerseits Signale an die Bedieneinheit 20 und das Touchscreen 20 abgeben.

Die Verbindung zwischen der Bedieneinheit 20 und der Steuerung 16 ist im Ausführungsbeispiel als Bussystem 26 ausgeführt.

Wie in Figur 2 erkennbar ist, ist die Bedieneinheit 20 an einer Innenseite 28 der Ummantelung 18 angebracht. Unter angebracht wird hier verstanden, dass sie angeschraubt angeklebt oder auch angeklemmt sein kann. Es ist auch denkbar, dass sie in einem Bügel oder einer Tasche abgelegt ist.

Im Ausführungsbeispiel ist die Bedieneinheit 20 an einer Innenseite 28 der Ummantelung 18 befestigt. Die Bedienbarkeit wird dadurch gewährleistet, dass die Bedieneinheit (20) von einer Außenseite 30 bedienbar ist. Dies kann beispielsweise dadurch gewährleistet sein, dass Bedienelemente durch die Ummantelung 18 durchgeführt sind oder das eine kabellose Verbindung zu einem sich außerhalb der Ummantelung befindlichen Sender besteht. Im Ausführungsbeispiel ist zumindest der Bereich 32 an dem die Bedieneinheit 20 angebracht ist so ausgebildet, dass Berührungen auf der Außenseite 30 zur Innenseite 28 und damit zur Bedieneinheit 20 weitergegeben werden. Dies kann mechanisch durch Verformung, elektrisch - beispielsweise über kapazitive oder induktive Messung oder visuell durch Aufnahme der Lichtverhältnisse erfolgen.

Um die auf dem Touchscreen 22 dargestellten Informationen wahrnehmen zu können, weist die Ummantelung 18 zumindest im Bereich 32 eine transparente Fläche 34 auf, durch die die dargestellten Informationen sichtbar sind. Diese Fläche kann beispielsweise ein Sichtfenster sein, das aus Glas, einer Glaskeramik oder einem Kunststoff besteht.

Im Ausführungsbeispiel ist, wie erwähnt, die Bedieneinheit 20 an der Innenseite 28 befestigt. Diese Befestigung ist als eine rastbare Klemmverbindung realisiert, so dass die Bedieneinheit 20 durch Öffnen der Klemmverbindung abgenommen werden kann. Dadurch ist es möglich, die Bedieneinheit 20 in die Hand zu nehmen oder auf einen entfernten Tisch zu legen und beispielsweise mit einem Computer zu verbinden. Natürlich ist es dazu notwendig, die Ummantelung 18 zu öffnen.

Die Verbindung zwischen der Bedieneinheit 20 und der Steuerung 16 wird beim Herausnehmen der Bedieneinheit 20 getrennt und durch eine drahtlose Verbindung ersetzt.

Die Bedieneinheit 20 ist in der Form eines kleinen, sogenannten Tablet PC aufgebaut und kann direkt oder über einen Hotspot mit dem Internet verbunden werden. Dazu weist die Bedieneinheit 20 eine nicht dargestellte, interne internetfähige Schaltung auf.

Natürlich ist es auch denkbar, dass die Steuerung 16 internetfähig ist und beispielsweise über ein LAN oder ein WLAN mit einem Router verbindbar ist.

Um das Heizgerät 10, das mit einer ein Touchscreen 22 aufweisenden Bedieneinheit 20 versehen ist, sinnvoll bedienen zu können, werden in einem bevorzugten Bedienungsverfahren über das Touchscreen 22 die wesentlichen, zur Steuerung des Heizgerätes 10 notwendigen Parameter angezeigt, ausgewählt und beeinflusst.

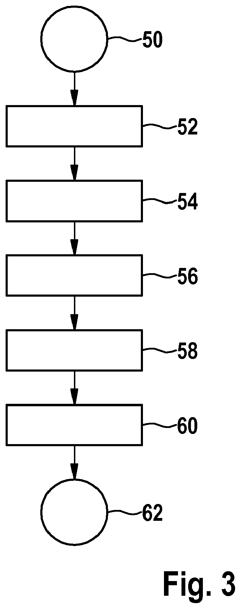

Das Verfahren zum Bedienen eines Heizgerätes 10 würde dann die in Figur 3 dargestellten Verfahrensschritte umfassen. In einem ersten Schritt 50 würde eine Kontaktaufnahme mit der Bedieneinheit 10 stattfinden, was beispielsweise dadurch erfolgen kann, dass das Touchscreen 22 berührt wird. Im zweiten Schritt 52 erwacht die Bedieneinheit 20 aus ihrem Standby und zeigt in einem dritten Schritt 54 ein Auswahlmenü an.

In dann folgenden Schritten können durch einzelne Menüpunkte und/oder Untermenüpunkte verschiedene Informationsebenen aufgerufen werden.

In einem weiteren Schritt 56 zeigt das Touchscreen 22 Parameter in Tabellenform und/oder grafisch an, die dann zu weiteren Entscheidung und Bedienung herangezogen werden können.

Sollte die Anzeige insbesondere eine grafische Anzeige oder die Anzeige von Berührungspunkten auf dem Touchscreen für den Bediener zu klein sein, kann er in einem Schritt 58 über das Touchscreen 22 die Anzeige vergrößern und auch wieder verkleinern. Dies alles dient dem Komfort bei der Bedienung des Heizgerätes.

Beispielsweise um Hilfe bei der Bedienung zu erhalten kann über das Touchscreen 22 in einem weiteren Schritt das Internet direkt oder über einen Router angewählt werden. Die weiteren Funktionen werden dann von der angewählten Homepage bereitgestellt.

In einem letzten Schritt 62 geht die Bedieneinheit 20 nach längerer Nichtbenutzung des Touchscreen 22 in einen Standby-Modus.

Die hier dargestellten Einzelheiten des erfindungsgemäßen Heizgerätes 10 sowie des Verfahrens zum Bedienen des Heizgerätes 10 wird der Fachmann einzeln oder gruppenweise kombinieren entsprechend seinen Bedürfnissen anpassen.

## Patentansprüche

1. Heizgerät (10) mit mindestens einer Heizeinrichtung(12), einem Wärmeübertragungselement (14), einer Steuerung (16), einer Ummantelung (18) und einer Bedieneinheit (20), wobei die Bedieneinheit (20) ein Touchscreen (22) aufweist, **dadurch gekennzeichnet, dass** die Bedieneinheit (20) abnehmbar ist und ausgebildet ist mittels eines Bussystems eine Verbindung mit der Steuerung (16) herzustellen, und wobei die Bedieneinheit ausgebildet ist, die Verbindung zwischen der Bedieneinheit (20) und der Steuerung (16) beim Herausnehmen der Bedieneinheit (20) zu trennen und durch eine drahtlose Verbindung zu ersetzen.

2. Heizgerät (10) nach Anspruch 1, **dadurch gekennzeichnet, dass** die Bedieneinheit (20) an einer Innenseite (28) der Ummantelung (18) angebracht ist.

3. Heizgerät (10) nach Anspruch 2, **dadurch gekennzeichnet, dass** die Bedieneinheit (20) von einer Außenseite (30) der Ummantelung (18) bedienbar ist.

4. Heizgerät (10) nach einem der Ansprüche 2 oder 3, **dadurch gekennzeichnet, dass** die Ummantelung (18) eine transparente Fläche (34) aufweist, durch die die Bedieneinheit (20) sichtbar ist.

5. Heizgerät (10) nach einem der vorhergehenden Ansprüche, **dadurch gekennzeichnet, dass** die Bedieneinheit (20) mit dem Internet direkt oder indirekt verbindbar ist.

## Claims

1. Heating device (10) having at least one heating unit (12), a heat transferring element (14), a controller (16), a casing (18) and an operating unit (20), wherein the operating unit (20) comprises a touch-screen (22), **characterized in that** the operating unit (20) can be removed and is designed to establish a connection with the controller (16) by means of a bus system, and wherein the operating unit is designed to separate the connection between the operating unit (20) and the controller (16) whilst removing the operating unit (20) and to replace the said connection by means of a wireless connection.

2. Heating device (10) according to Claim 1, **characterized in that** the operating unit (20) is attached to an inner face (28) of the casing (18).

3. Heating device (10) according to Claim 2, **characterized in that** the operating unit (20) can be operated from an outer face (30) of the casing (18).

4. Heating device (10) according to either of Claims 2 and 3, **characterized in that** the casing (18) comprises a transparent surface (34) through which the operating unit (20) is visible.

5. Heating device (10) according to one of the preceding claims, **characterized in that** the operating unit (20) can be connected to the internet directly or indirectly.

## Revendications

1. Appareil de chauffage (10) comprenant au moins un dispositif de chauffage (12), un élément de transfert thermique (14), une commande (16), une enveloppe (18) et une unité d'actionnement (20), l'unité d'actionnement (20) présentant un écran tactile (22),
**caractérisé en ce que** l'unité d'actionnement (20) peut être enlevée et est réalisée de manière à établir une connexion avec la commande (16) au moyen d'un système de bus et l'unité d'actionnement étant réalisée de manière à séparer la connexion entre l'unité d'actionnement (20) et la commande (16) lors du retrait de l'unité d'actionnement (20), et à la remplacer par une connexion sans fil.

2. Appareil de chauffage (10) selon la revendication 1, **caractérisé en ce que** l'unité d'actionnement (20) est montée au niveau d'un côté intérieur (28) de l'enveloppe (18).

3. Appareil de chauffage (10) selon la revendication 2, **caractérisé en ce que** l'unité d'actionnement (20) peut être commandée depuis un côté extérieur (30) de l'enveloppe (18).

4. Appareil de chauffage (10) selon l'une quelconque des revendications 2 et 3, **caractérisé en ce que** l'enveloppe (18) présente une surface transparente (34) à travers laquelle l'unité d'actionnement (20) est visible.

5. Appareil de chauffage (10) selon l'une quelconque des revendications précédentes, **caractérisé en ce que** l'unité d'actionnement (20) peut être connectée directement ou indirectement à l'Internet.
